# EUROPEAN PATENT SPECIFICATION

(11) **EP 3 994 219 B1**
(45) Date of publication and mention of the grant of the patent: **08.10.2025**
(21) Application number: 20734173.6
(22) Date of filing: 22.06.2020
(51) Int. Cl.: C09D 133/06, C09D 161/02

(54) **A COATING COMPOSITION, ITS PREPARATION METHOD AND USE THEREOF**
EINE BESCHICHTUNGSZUSAMMENSETZUNG, IHRE ZUBEREITUNGSMETHODE UND DEREN VERWENDUNG
UNE COMPOSITION DE REVÊTEMENT, SON PROCÉDÉ DE PRÉPARATION ET SON UTILISATION

(30) Priority: 02.07.2019 WO PCT/CN2019/094428
(43) Date of publication of application: 11.05.2022
(73) Proprietor: BASF Coatings GmbH, 48165 Münster (DE)
(72) Inventor: WANG, Ming, Shanghai, 200137 (CN); LI, Chun Yang, Shanghai, 034300 (CN); SONG, Yuan Yuan, Shanghai, 200137 (CN); SUI, Ling Yu, Shanghai, 200137 (CN); HIRSEMANN, Stefan, Shanghai, 200137 (CN); CORTEN, Cathrin, 48165 Muenster (DE)
(74) Representative: BASF IP Association
(86) International application number: PCT/EP2020/067297
(87) International publication number: WO 2021/001190

(56) References cited:
- WO-A1-2007/046741
- US-A1- 2003 191 272
- US-A1- 2004 157 003
- US-A1- 2014 295 198

## Description

### FIELD OF THE INVENTION

The present invention relates to a coating composition and specifically relates to a solvent-borne automotive coating. The present invention also relates to a preparation method of such coating composition as well as its use in automotive.

### BACKGROUND OF THE INVENTION

In automobile finishing, metal or plastic substrates are painted with multilayer coatings including e-coating, primer, basecoat and clearcoat. Clearcoat is the outermost layer attached to basecoat that protects underlying coating layers and at the same time provides glossy appearance. One significant requirement for clearcoat is scratch resistant and therefore clearcoat needs to have a high hardness. US2004/157003A1 discloses in one example a coating composition comprising an acrylate polymeric binder comprising crosslinkable hydroxyl groups, an isocyanate crosslinking agent having functional groups that are reactive to OH groups, and dipentaerythritol pentaacrylate as reactive diluent.

Normally coating compositions for clearcoat are solvent-borne since solvent is a critical component to reduce viscosity and improve appearances of clearcoat while water-borne coating compositions are difficult to achieve a same or comparable performances. However, the disadvantage of high solvent content are also obvious i.e. VOC problem that brings negative influcence to the environments. Therefore, it is required to find a balance between good performance and enviromental protection i.e. to reduce VOC in coating composition and meanwhile still to achieve satisfying performance of clearcoat.

Thus, it is still desirable to obtain a coating composition that is not only having low VOC but also high hardness after curing.

### SUMMARY OF THE INVENTION

This invention provided a coating composition comprising a polymeric binder selected from polyacrylates (A1) and/or polyesters (A2) having a crosslinkable amount of hydroxyl groups, and a crosslinking agent reactive to hydroxyl groups and a monomeric and/or oligomeric reactive diluent having at least one olefinic double bond. This coating composition has not only low VOC but also high hardness after curing.

Accordingly, in one aspect of the present invention, it provides a coating composition comprising:
a) from 25 to 50% by weight of a polymeric binder selected from polyacrylates (A1) and/or polyesters (A2) with a crosslinkable amount of hydroxyl groups, as component (A),
b) from 15 to 25% by weight of a crosslinking agent having functional groups that are reactive to OH groups, as component (B), and
c) from 35 to 50% by weight of at least one monomeric and/or oligomeric reactive diluent with at least one olefinic double bond, as component (C),
the weight percentage is based on the total weight of the coating composition.

In another aspect of the present invention, it provides a process for preparing the coating composition according to the present invention by mixing the components comprised therein.

In another aspect of the present invention, it provides use of the coating composition according to the present invention for producing a cured coating layer on a substrate by application and subsequent thermal curing the coating composition according to the present invention.

In a further aspect of the present invention, it provides a coating layer which is produced on a substrate using the coating composition according to the invention.

### Detailed Description of the Invention

This invention provided a coating composition comprising:
a) from 25 to 50% by weight of a polymeric binder selected from polyacrylates (A1) and/or polyesters (A2) with a crosslinkable amount of hydroxyl groups, as component (A),
b) from 15 to 25% by weight of a crosslinking agent having functional groups that are reactive to OH groups, as component (B), and
c) from 35 to 50% by weight of at least one monomeric and/or oligomeric reactive diluent with at least one olefinic double bond, as component (C),
the weight percentage is based on the total weight of the coating composition.

The coating composition according to the present invention has a high hardness after being cured into a coating layer. In some embodiments, the coating composition after being cured into a coating layer, may have a hardness of at least 110 seconds, preferably at least 120 seconds, more preferably at least 130 seconds, even more preferably at least 150 seconds, as measured according to the standard DIN EN ISO 1522. Moreover, the coating composition has a significantly reduced VOC by replacing unreactive organic solvents with a monomeric and/or oligomeric reactive diluent having at least one olefinic double bond. The VOC content of the coating composition is preferably no more than 40% by weight, more preferably no more than 30% by weight and even more preferably no more than 20% by weight. The coating composition is applied onto a substrate and cured to obtain a coating layer that has satisfying hardness. Examples of substrates are bodies and bodywork parts made of metal or plastics.

The hydroxyl value or hydroxyl number or refers to the number of milligrams of potassium hydroxide required to neutralize the acetic acid taken up on acetylation of one gram of a chemical substance that contains free hydroxyl groups. The hydroxyl value is a measure of the content of free hydroxyl groups in a chemical substance, usually expressed in units of the mass of potassium hydroxide (KOH) in milligrams equivalent to the hydroxyl content of one gram of the chemical substance. In the context of the present invention, unless indicated otherwise, the hydroxyl number is determined experimentally by titration in accordance with DIN 53240-2 (Determination of hydroxyl value - Part 2: Method with catalyst).

The acid value or acid number refers to the mass of potassium hydroxide (KOH) in milligrams that is required to neutralize one gram of chemical substance. The acid number is a measure of the number of carboxylic acid groups in a chemical compound or in a mixture of compounds, such as component (A). In a typical procedure, a known amount of sample is dissolved in an organic solvent (often isopropanol) and titrated with a solution of potassium hydroxide (KOH) of a known concentration using phenolphthalein as a color indicator. The acid number is used to quantify the acidity of a substance. It is the quantity of base, expressed in milligrams of potassium hydroxide, that is required to neutralize the acidic constituents in 1 g of sample.

### Component A

The coating composition comprises from 25 to 50% by weight of a polymeric binder selected from polyacrylates (A1) and/or polyesters (A2) with a crosslinkable amount of hydroxyl groups, as component (A), the weight percentage is based on the total weight of the coating composition.

Component (A) is a binder of the coating composition. As component (A), it may be one or more polyacrylates with a crosslinkable amount of hydroxyl groups (A1), one or more polyesters with a crosslinkable amount of hydroxyl groups (A2), or any combinations thereof. In order to obtain crosslinking structure when the coating composition is being cured, component (A) needs to be OH-functional and the amount of hydroxyl groups contained therein should be high enough to achieve the crosslinking of the coating composition. Thus, the polyacrylates and polyesters as component (A) are also called polyacrylate polyols (A1) and polyester polyols (A2) respectively. These polyacrylate polyols and polyester polyols each need to contain more than two hydroxyl groups per molecule, for example at least 3 hydroxyl groups per molecule. In some embodiments, the polyacrylate polyols may have an OH number of from 20 to 200 mg KOH/g, preferably from 80 to 180 mg KOH/g, more preferably from 110 to 180 mg KOH/g.

Polyacrylate polyols (A1) refer to (meth)acrylate (co)polymers with a crosslinkable amount of hydroxyl groups. The term (co)polymer, as is known, refers to homopolymer, copolymer or a combination thereof. In some embodiments, the (meth)acrylate (co)polymer with a crosslinkable amount of hydroxyl groups may be a polymeric organic compound synthesized from (meth)acrylate without hydroxyl functionality, (meth)acrylate with at least one hydroxyl functionality, and optionally (meth)acrylic acid, and optionally other monomers containing at least one olefinic double bond per molecule other than the foregoing mentioned (meth)acrylates and (meth)acrylic acid, as monomers. The term (meth)acrylate in the context of the invention stands for acrylates and/or methacrylates. The term (meth)acrylic acid in the context of the invention stands for acrylic acid and/or methacrylic acid.

Examples of the acrylate and methacrylate monomers without hydroxyl functionality include various alkyl (meth)acrylates and cycloalkyl (meth)acrylates, such as C₁-C₁₈-alkyl (meth)acrylates and C₃-C₈-cycloalkyl (meth)acrylates, preferably C₁-C₁₂-alkyl (meth)acrylates and C₃-C₆-cycloalkyl (meth)acrylates, more preferably C₁-C₆-alkyl (meth)acrylates and C₅-C₆-cycloalkyl (meth)acrylates. As examples of said alkyl (meth)acrylates without hydroxyl functionality, mention may be made of ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, amyl acrylate, amyl methacrylate, hexyl acrylate, hexyl methacrylate, ethylhexyl acrylate, ethylhexyl methacrylate, 3,3,5-trimethylhexyl acrylate, 3,3,5-trimethylhexyl methacrylate, stearyl acrylate, stearyl methacrylate, lauryl acrylate, lauryl methacrylate, or any combinations thereof, even more preferably methyl acrylate, methyl methacrylate, ethyl acrylate, ethyl methacrylate, propyl acrylate, propyl methacrylate, butyl acrylate, butyl methacrylate, ethylhexyl acrylate, ethylhexyl methacrylate, or any combinations thereof. As examples of said cycloalkyl (meth)acrylates without hydroxyl functionality, mention may be made of cyclopentyl acrylate, cyclopentyl methacrylate, isobornyl acrylate, isobornyl methacrylate, cyclohexyl acrylate, cyclohexyl methacrylate, or any combinations thereof.

Examples of the acrylate and methacrylate monomers with at least one hydroxyl functionality include various hydroxyalkyl (meth)acrylates, preferably hydroxyC₁-C₆-alkyl (meth)acrylates, more preferably hydroxyC₂-C₄-alkyl (meth)acrylates. As examples of said hydroxyalkyl (meth)acrylates with at least one hydroxyl functionality, mention may be made of 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate, or any combinations thereof.

The polyacrylates with a crosslinkable amount of hydroxyl groups may optionally comprise, in the form of monomeric units, acrylic acid, methacrylic acid or any combinations thereof as comonomers. In this instance, the polyacrylate polyols may comprise free or unreacted carboxylic acid groups. In some embodiments, the polyacrylate polyols may generally have an acid value of from 0 to 200 mg KOH/g, preferably from 0 to 50 mg KOH/g.

The polyacrylates with a crosslinkable amount of hydroxyl groups (A1) optionally comprise, in the form of monomeric units, further monomers containing at least one olefinic double bond per molecule other than the said (meth)acrylates and (meth)acrylic acid. These further monomers may be vinylaromatic hydrocarbons, such as styrene, vinyltoluene, alpha-methylstyrene, or any combinations thereof, and preferably styrene, amides or nitriles of acrylic or methacrylic acid, vinyl esters, vinyl ethers, or any combinations thereof.

The molecular weights of the polyacrylates with a crosslinkable amount of hydroxyl groups (A1) are within the ranges familiar to the skilled person and are ultimately not subject to any restrictions. Preference is given to number-average molecular weights Mₙ of from 1000 to 5000 g/mol, more preferably from 1500 to 4000 g/mol. Alternatively, preference is given to weight-average molecular weights M_{w} of from 3000 to 20000 g/mol, more preferably from 5000 to 15000 g/mol.

The number-average molecular weight Mₙ and weight-average molecular weight M_{w} are determined by means of gel permeation chromatography at 40°C with a high-pressure liquid chromatography pump and a refractive index detector. The eluent used was tetrahydrofuran, with an elution rate of 1 ml/min. Calibration is carried out by means of polystyrene standards.

As the polyacrylates with a crosslinkable amount of hydroxyl groups (A1), it is possible to use those not only commercially available but also those independently prepared (meth)acrylate (co)polymers. The preparation of the (meth)acrylate (co)polymers (A1) has no technical peculiarities in terms of process, but instead is accomplished, for example, with the aid of the methods, customary and known within the plastics field, of continuous or batchwise, free-radically initiated (co)polymerization in bulk, solution, emulsion, miniemulsion or microemulsion, under atmospheric or superatmospheric pressure, in stirred tanks, autoclaves, tube reactors, loop reactors or Taylor reactors, at temperatures of preferably 50 to 200°C.

Polyester polyol (A2) refers to a polymeric organic compound with a crosslinkable amount of hydroxyl groups which comprises, in the form of polycondensation monomeric units, organic polyols containing more than two hydroxyl groups per molecule and polybasic organic carboxylic acids containing two or more than two carboxyl groups per molecule, or consists of, in the form of polycondensation monomeric units, the foresaid organic polyols and the foresaid polybasic organic carboxylic acids. These polyols and polycarboxylic acids are linked to one another by esterification, in other words by condensation reaction. Accordingly, the polyesters are assigned to the group of the polycondensation resins. Depending on nature, functionality, fractions used, and proportions of the starting components, linear or branched products, for example, are obtained. Whereas the use of higher polyfunctional alcohols (OH functionality, in other words number of OH groups per molecule, of more than 2), for example, brings about branching. In the course of the preparation it is, naturally, also possible to make proportional use of monofunctional components, such as monocarboxylic acids, for example C₁-C₁₀-carboxylic acids. As is known, polyesters may also be prepared using, instead of or in addition to the corresponding organic carboxylic acids, the anhydrides of the carboxylic acids, preferably the anhydrides of dicarboxylic acids. One example of preparation of anhydrides is through the use of hydroxycarboxylic acids or the lactones derived from the hydroxycarboxylic acids by intramolecular esterification.

In the preparation of polyesters, it is possible to employ polycarboxylic acids, for example aliphatic polycarboxylic acids such as adipic acid, and polyols, for example aliphatic polyols, such as aliphatic trihydric and tetrahydric alcohols, for example trimethylolpropane, glycerol, pentaerythritol, or any combinations thereof.

Likewise possible for use are aromatic polycarboxylic acids and aromatic polyols, or else polycarboxylic acids and polyols which in addition to the functional groups which identify their class of compound contain not only (linear, branched and/or cyclic) aliphatic but also aromatic groups. Also possible is the use of linear, branched and/or cyclic aliphatic and/or aromatic hydroxycarboxylic acids and also lactones i.e. hydroxycarboxylic acids and lactones which, in addition to the functional groups which identify their class of compound, have linear, branched and/or cyclic aliphatic and/or aromatic groups.

Thus, in some embodiments of the present invention, the organic polyol containing more than two hydroxyl groups per molecule is one or more selected from the group consisting of aliphatic polyols and aromatic polyols, preferably one or more selected from the group consisting of aliphatic trihydric and tetrahydric alcohols, more preferably one or more selected from the group consisting of trimethylolpropane, glycerol, and pentaerythritol.

In some embodiments of the present invention, the polybasic organic carboxylic acid containing two or more than two carboxyl groups or latent carboxyl groups per molecule is one or more selected from the group consisting of aliphatic polycarboxylic acids and anhydrides thereof, aromatic polycarboxylic acids and anhydrides thereof, aliphatic hydroxycarboxylic acids and lactones thereof, aromatic hydroxycarboxylic acids and lactones thereof, preferably one or more selected from the group consisting of dicarboxylic acids having from 2 to 44, preferably from 4 to 36 carbon atoms in the molecule and anhydrides thereof, polyfunctional carboxylic acids having 3 or more carboxyl groups and anhydrides thereof, and hydroxycarboxylic acids having from 1 to 18, preferably from 4 to 12 carbon atoms in the molecule and lactones thereof, more preferably one or more selected from the group consisting of o-phthalic acid, isophthalic acid, terephthalic acid, tetrahydrophthalic acid, hexahydrophthalic acid, cyclohexanedicarboxylic acid, succinic acid, adipic acid, azelaic acid, sebacic acid, maleic acid, fumaric acid, glutaric acid, hexachloroheptanedicarboxylic acid, tetrachlorophthalic acid, and anhydrides thereof, hydroxycaproic acid, hydroxybutyric acid, hydroxydecanoic acid, 12-hydroxystearic acid, and lactones thereof.

The polyesters (A2) are also OH-functional and have a crosslinkable amount of hydroxyl groups. The coating composition of the invention accordingly comprises preferably at least one, preferably precisely one, polyester (A2). In some embodiments, the polyester polyols may have an OH number of from 20 to 200 mg KOH/g, preferably from 80 to 180 mg KOH/g, very preferably from 120 to 180 mg KOH/g. The polyesters (A2) therefore preferably possess a high amount of OH groups.

Depending on the types and amount of the polybasic organic carboxylic acids containing two or more than two carboxyl groups per molecule for the preparation of the polyesters with a crosslinkable amount of hydroxyl groups (A2), the polyesters with a crosslinkable amount of hydroxyl groups (A2) may comprise free or unreacted carboxylic acid groups. In some embodiments, the polyester polyols (A2) may generally have an acid value of from 1 to 200 mg KOH/g, preferably from 10 to 50 mg KOH/g.

The molecular weights of the polyesters with a crosslinkable amount of hydroxyl groups (A2) are within the ranges familiar to the skilled person and are ultimately not subject to any restrictions. Preference is given to number-average molecular weights Mₙ of from 1000 to 5000 g/mol, more preferably from 1000 to 3000 g/mol. Alternatively, preference is given to weight-average molecular weights M_{w} of from 2000 to 20000 g/mol, more preferably from 2500 to 5000 g/mol.

With regards to polyesters (A2), it is possible to use polyesters that are available commercially and also self-prepared polyesters. The preparation of polyesters has no peculiarities in terms of process, and takes place generally via the conventional and known polymerization processes such as polycondensation processes, in bulk, solution, emulsion, microemulsion, in stirred tanks, autoclaves, tube reactors, loop reactors or Taylor reactors, at temperatures of preferably from 50 to 300°C, using, where appropriate, the catalysts typical for such reactions, and/or the water separators that are typically employed for condensation reactions.

According to the present invention, the coating composition comprises generally from 25 to 50% by weight of a polymeric binder selected from polyacrylates (A1) and/or polyesters (A2) with a crosslinkable amount of hydroxyl groups, as component (A), the weight percentage is based on the total weight of the coating composition. In some embodiments, the coating composition comprises preferably from 28 to 40% by weight, more preferably from 30 to 35 % of a polymeric binder selected from polyacrylates (A1) and/or polyesters (A2) with a crosslinkable amount of hydroxyl groups, as component (A), the weight percentage is based on the total weight of the coating composition.

Also present may be polyaddition resins and/or polycondensation resins as binders. Examples of polyaddition resins and/or polycondensation resins include alkyds, polyurethanes, polylactones, polycarbonates, polyethers, epoxy resin-amine adducts, polyureas, polyamides, polyimides, polyester-polyurethanes, polyether-polyurethanes, polyester-polyether-polyurethanes, or any combinations thereof.

As is known, component (A) as binders may be cured, for example, thermally and/or with actinic radiation.

As already noted, component (A) contains a crosslinkable amount of hydroxyl groups and thus is OH-functional. As the skilled person is aware, it is possible to bring about crosslinking reactions in a binder via OH groups as functional groups. In the context of the present invention, the OH groups of component (A) are utilized in order to bring about the three-dimensional crosslinking, in other words the curing, of the coating composition of the invention, with complementary functional groups of crosslinking agents. Accordingly, in terms of their extant OH groups, component (A) is to be understood principally as externally crosslinking, and the coating composition of the invention comprises a crosslinking agent as component (B), having functional groups which are reactive to OH groups.

### Component B

The coating composition comprises from 15 to 25% by weight of a crosslinking agent having functional groups that are reactive to OH groups, as component (B). In the context of the invention, a crosslinking agent is also called as a crosslinker or a hardener. The crosslinking agent as component (B) refers to all organic monomeric, oligomeric, and/or polymeric compounds which are able to enter crosslinking reactions with the hydroxyl groups in component (A) as binder identified above.

The crosslinker component (B) may include nonblocked, partially blocked and/or fully blocked polyisocyanates, amino resins or any combinations thereof. Preference is given to nonblocked polyisocyanates. For the purposes of the invention, polyisocyanates as crosslinking agents are understood to be organic compounds which contain two or more than two isocyanate groups per molecule. In principle it is possible to use all organic compounds that contain two or more than two isocyanate groups per molecule. It is also possible to use reaction products that contain isocyanate groups and are formed from, for example, polyols and polyamines and polyisocyanates.

It is also possible to use aliphatic or cycloaliphatic polyisocyanates, preferably diisocyanates, very preferably aliphatic diisocyanates, but more preferably hexamethylene diisocyanate, dimerized hexamethylene diisocyanate, trimerized hexamethylene diisocyanate, or any combinations thereof.

Further examples of polyisocyanates are isophorone diisocyanate, 2-isocyanatopropylcyclohexyl isocyanate, dicyclohexylmethane 2,4'-diisocyanate, dicyclohexylmethane 4,4'-diisocyanate, diisocyanates derived from dimer fatty acids, 1,8-diisocyanato-4-isocyanatomethyloctane, 1,7-diisocyanato-4-isocyanatomethylheptane, 1-isocyanato-2-(3-isocyanatopropyl)cyclohexane, or any combinations thereof.

Likewise deserving of mention are, for example, tetramethylene 1,4-diisocyanate, cyclohexyl 1,4-diisocyanate, 1,5-dimethyl-2,4-di(isocyanatomethyl)benzene, 1,5-dimethyl-2,4-di(isocyanatoethyl)benzene, 1,3,5-trimethyl-2,4-di(isocyanatomethyl)benzene, 1,3,5-triethyl-2,4-di(isocyanatomethyl)benzene, dicyclohexyldimethylmethane 4,4'-diisocyanate, 2,4-tolylene diisocyanate, 2,6-tolylene diisocyanate, diphenylmethane 4,4'-diisocyanate, or any combinations thereof.

In an especially preferred embodiment, the trimer of hexamethylene 1,6-diisocyanate is used as crosslinking agent, this compound is available, for example, as a commercial product under the names Desmodur 3370, BL 3575, and N 3390 (Bayer MaterialScience).

Further examples of polyisocyanates are so-called paint polyisocyanates, having aliphatically, cycloaliphatically, araliphatically and/or aromatically attached free isocyanate groups. Preference is given to using polyisocyanates having 2 to 5 isocyanate groups per molecule and having viscosities of 100 to 10000, preferably 100 to 5000, and more preferably 100 to 2000 mPa.s (at 23°C). Optionally, the polyisocyanates may also be admixed with small amounts of organic solvent, preferably 1% to 25% by weight, based on pure polyisocyanate, in order thus to improve the ease of incorporation of the isocyanate and optionally to lower the viscosity of the polyisocyanate to a level within the abovementioned ranges. Examples of solvent additions to the polyisocyanates include ethoxyethyl propionate, amyl methyl ketone or butyl acetate. Furthermore, the polyisocyanates may have been subjected to conventional hydrophilic or hydrophobic modification.

Polyurethane prepolymers containing isocyanate groups could be used as well. They are prepared by reacting polyols with an excess of polyisocyanates, and preferably having low viscosity. Further examples of polyisocyanates are polyisocyanates containing isocyanurate, biuret, allophanate, iminooxadiazinedione, urethane, urea and/or uretdione groups. Polyisocyanates containing urethane groups, for example, are obtained by reacting some of the isocyanate groups with polyols, such as trimethylolpropane and glycerol.

The above-mentioned polyisocyanates are crosslinking agents present in a free form. The free polyisocyanates are used in multicomponent coating systems, preferably in two-component coating systems. For the present invention this means that component (A) and crosslinker component (B) of the coating composition of the invention are stored separately from one another in the case of a two-component coating composition and are only combined immediately before the application of the coating composition. This is done in order to prevent premature crosslinking of the binders via the OH groups of component (A) and of the free polyisocyanate crosslinkers.

As indicated above, however, the use of polyisocyanates which are blocked is likewise possible. These blocked polyisocyanates are used as crosslinking agents in the context of the invention in the case of one-component coating compositions, which means, therefore, that the OH-functional (meth)acrylate (co)polymer component (A) and the crosslinker component (B) can be stored as a mixture with one another. In contrast to the free isocyanates, the blocked polyisocyanate crosslinkers are able to react only at elevated temperatures with the functional groups of the binders via the OH groups of component (A), in order to construct a three-dimensional network and hence to lead to the curing of the composition. Such blocked polyisocyanate crosslinking agents may also be used in the multicomponent systems, for example two-component systems.

The reason that the blocked crosslinking agents bring about the curing of the composition only at elevated temperatures (approximately > 80°C-100°C) is known to be that the blocking agents are eliminated from the isocyanate functions only at these temperatures, and so are then able to react with the complementary groups of the binders via the OH groups of component (A).

Examples of typical blocking agents include phenols, alcohols, oximes, pyrazoles, amines, and CH-acidic compounds such as diethyl malonate. The blocking reaction is carried out typically by reaction of the free NCO groups with the stated blocking agents in the presence, for example, of catalysts such as dibutyltin dilaurate or tin (II) bis(2-ethylhexanoate). The blocking agents and the corresponding reactions are known to the skilled person and are comprehensively described in the US patent specification US-A-4,444,954, for example. Preferred for use as blocking agents are caprolactam, butanone oxime, acetone oxime, diethyl malonate, dimethylpyrazole or phenol.

In the context of the invention amino resins could be used as additional crosslinking agents. Examples of the amino resins are melamine-, benzoguanamine-, and urea-formaldehyde resins and melamine-formaldehyde resins are preferred. They are typically used in a form in which they are etherified with lower alcohols, such as aliphatic monohydric alcohol having from 1 to 6 carbon atoms in the molecule, usually methanol, butanol, or any combinations thereof. One suitable amino resin is hexamethoxymethylmelamine, for example. Condensation products of other amines and amides may likewise be used, however, examples being aldehyde condensates of triazines, diazines, triazoles, guanidines, guanimines, and alkyl- and aryl-substituted derivatives of such compounds, including alkyl- and aryl-substituted melamines. Some examples of such compounds are N,N'-dimethylurea, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 3,4,6-tris(ethylamino)-1,3,5-triazine, tris(alkoxycarbonylamino)triazine, and the like. It will be appreciated that condensation products with other aldehydes can also be used in addition to the condensation products with formaldehyde.

Also suitable are the customary and known amino resins some of whose methylol and/or methoxymethyl groups may have been defunctionalized by means of carbamate groups or allophanate groups. Crosslinking agents of this kind are described in patent specifications US-A-4 710 542 and EP-B-0 245 700.

Amino resins suitable in the context of the invention are available on the market under the trademarks Cymel, Luwipal (including Luwipal 014, 018 and 072), Maprenal, Resimene, and Beetle, for example.

In the case of the preferred crosslinking agents containing isocyanate groups, at least one crosslinking agent is used preferably in an amount such that there is an excess of the total amount of reactive NCO groups in the crosslinking agent used in comparison to the total amount of hydroxyl groups in the compounds described earlier on above that are used as binders. Preferably the ratio of the hydroxyl compounds of the compounds used as binders to the NCO groups of at least one crosslinking agent is between 1:1 to 1:1.5, preferably between 1:1.05 to 1:1.25 and more preferably between 1:1.05 to 1:1.15.

The coating composition comprises from 15 to 25% by weight of a crosslinking agent having functional groups reactive to OH groups, as component (B), preferably the polyisocyanates and/or amino resins and more preferably the nonblocked polyisocyanates, the weight percentage is based on the total weight of the coating composition. In some embodiments, the coating composition comprises preferably from 16 to 20% by weight of a crosslinking agent having functional groups reactive to OH groups, as component (B), the weight percentage is based on the total weight of the coating composition.

### Component C

The coating composition according to the present invention comprises at least one monomeric and/or oligomeric reactive diluent with at least one olefinic double bond, as component (C). Component (C) may also be used as inert diluent in the synthesis of component (A). Said reactive diluents may be mono-, di- or polyunsaturated. They serve customarily to influence the viscosity and technical properties of the coating composition, such as the crosslinking density.

Examples of such reactive diluents may be (meth)acrylic acid, mono-, di-, tri-, tetra-, penta-, and hexa(meth)acrylates, polyester (meth)acrylates, epoxy (meth)acrylates, urethane (meth)acrylates, melamine (meth)acrylates, maleic acid and its diesters and/or monoesters, vinyl acetate, vinyl ethers, vinylureas, and the like.

For example, they include an acrylate and/or methacrylate ester of a 2-alkyl-1,3-propanediol, a 2,2-dialkyl-1,3-propanediol, a 2-alkyl-2-hydroxyalkyl-1,3-propanediol, a 2,2-dihydroxyalkyl-1,3-propanediol, a polyalkoxylated 2-alkyl-1,3-propanediol, a polyalkoxylated 2,2-dialkyl-1,3-propanediol, a polyalkoxylated 2-alkyl-2-hydroxyalkyl-1,3-propanediol and/or a polyalkoxylated 2,2-dihydroxyalkyl-1,3-propanediol, wherein alkyl is C₁-C₈ linear or branched alkanyl and polyalkoxylated is polyethoxylated, polypropoxylated and/or polybutoxylated having 1-20 alkoxy units. They further include alkylene glycol di(meth)acrylate, polyethylene glycol di(meth)acrylate, 1,3-butanediol di(meth)acrylate, vinyl (meth)acrylate, allyl (meth)acrylate, glycerol tri(meth)acrylate, trimethylolpropane tri(meth)acrylate, trimethylolpropane di(meth)acrylate, styrene, vinyltoluene, divinylbenzene, pentaerythritol tri(meth)acrylate, pentaerythritol tetra(meth)acrylate, dipropylene glycol di(meth)acrylate, hexanediol di(meth)acrylate, ethoxyethoxyethyl acrylate, N-vinylpyrrolidone, phenoxyethyl acrylate, dimethyl-aminoethyl acrylate, hydroxyethyl (meth)acrylate, butoxyethyl acrylate, isobornyl (meth)acrylate, dimethylacrylamide and dicyclopentyl acrylate.

The reactive diluent as component (C) is in especially preferred embodiments of the present invention 1,3-butanediol di(meth)acrylate, dipropylene glycol di(meth)acrylate, tripropylene glycol di(meth)acrylate, hexanediol di(meth)acrylate, neopentyl glycol di(meth)acrylate, 2-butyl-2-ethyl-1,3-propanediol di(meth)acrylate, glycerol tri(meth)acrylate, trimethylolpropane tri(meth)acrylate, pentaerythritol tetra(meth)acrylate, dipentaerythritol tetra(meth)acrylate, dipentaerythritol hexa(meth)acrylate, di(meth)acrylates of polyalkoxylated neopentyl glycol, di(meth)acrylates of polyalkoxylated 2-butyl-2-ethyl-1,3-propanediol, tri(meth)acrylates of polyalkoxylated glycerol, tri(meth)acrylates of polyalkoxylated trimethylolpropane, tetra(meth)acrylates of polyalkoxylated pentaerythritol, and hexa(meth)acrylates of polyalkoxylated dipentaerythritol. Polyalkoxylated is here preferably polyethoxylated and/or polypropoxylated. Further suitable examples of component (C) include vinyl, allyl and/or methallyl ethers, styrene, vinyl toluene and/or divinylbenzene.

In some preferred embodiments of the present invention, reactive diluents are di-, tri-, tetra-, penta- and/or hexa(meth)acrylates, such as, trimethylolpropane tri(meth)acrylate, tripropylene glycol di(meth)acrylate, acrylated dipentaerythritol, hexanediol diacrylate, trimethylolpropane ethoxy triacrylate, or any combinations thereof. Preferred reactive diluents also include isocyanate-functional (meth)acrylates, such as Laromer LR 9000 from BASF AG. It is more preferred to employ one or more selected from the group consisting of trimethylolpropane tri(meth)acrylate, tripropylene glycol di(meth)acrylate, acrylated dipentaerythritol, hexanediol diacrylate, trimethylolpropane ethoxy triacrylate, and isocyanate-functional (meth)acrylates (for example Laromer LR 9000).

According to the present invention, the coating composition comprises generally from 35 to 50% by weight of at least one monomeric and/or oligomeric reactive diluent with at least one olefinic double bond, as component (C), the weight percentage is based on the total weight of the coating composition.

### Other components

The coating composition of the invention may further comprise at least one organic solvent which in the coating composition are chemically inert to compounds (A) and (B), and do not react with (A) and (B) on curing of the coating composition of the invention.

Organic solvents are used which do not inhibit the crosslinking of the coating composition of the invention and/or do not enter chemical reactions with the other constituents of the coating composition of the invention. The skilled person can therefore select suitable solvents easily on the basis of their known solvency and their reactivity.

Examples of such solvents are aliphatic and/or aromatic hydrocarbons such as toluene, xylene, solvent naphtha, Solvesso 100, or Hydrosol^{®} (from ARAL), ketones, such as acetone, methyl ethyl ketone or methyl amyl ketone, esters, such as ethyl acetate, butyl acetate, butylglycol acetate, pentyl acetate or ethyl ethoxypropionate, ethers, or mixtures of the aforesaid solvents.

The coating composition of the invention comprises not more than 40%, preferably not more than 30%, by weight of the above organic solvents, the weight percentage is based on the total weight of the coating composition.

The coating composition of the invention is water-containing i.e. in addition to organic solvent that is present, the coating composition further contains no more than 1%, preferably no more than 0.5%, and more preferably no more than 0.25% by weight of water, based on the total amount of the composition.

Furthermore, the coating composition of the invention may comprise at least one conventional coating additive.

Examples of coatings additives are UV absorbers; light stabilizers such as hindered amine light stabilizer, benzotriazoles or oxalanilides; transparent fillers such as SiO₂ nanoparticles, barium sulfate, zinc oxide and Aerosil; free-radical scavengers; slip additives; polymerization inhibitors; defoamers; wetting agents such as siloxanes, fluorine-containing compounds, carboxylic monoesters; phosphoric esters, polyacrylic acids and copolymers; polyurethanes; adhesion promoters such as tricyclodecanedimethanol; film-forming assisting agent such as cellulose derivatives; and flame retardants.

Besides the coating composition of the invention, the present invention further provides the preparation of the coating composition of the invention.

Thus, according to the second aspect of the present invention, it provides a process for preparing the coating composition according to the present invention by mixing the components comprised therein.

In terms of method, the preparation has no peculiarities, but instead takes place by the mixing and homogenizing of the above-described constituents using conventional mixing techniques and apparatus such as stirred tanks, agitator mills, extruders, compounders, Ultraturrax, in-line dissolvers, static mixers, toothed-wheel dispersers, pressure relief nozzles and/or microfluidizers, optionally with exclusion of actinic radiation.

For preferred two-component coating systems, nonblocked polyisocyanates as crosslinkers in component (B) and component (A) are stored separately and will not be combined and mixed until applying onto substrates, in order to prevent premature crosslinking of the binders via OH groups of component (A) with the free polyisocyanates. For two-component coating systems, the above-indicated components of the coating composition, more particularly the rheological assistants, reactive diluents and also organic solvents and any coatings additives present, are mixed with component (A) and optionally stored. This obtained mixture is then admixed with component (B) that is present as a mixture with organic solvents, immediately prior to the application onto substrates. Admixing immediately prior to application means, in the context of the present invention, admixing within not more than 30 minutes, preferably not more than 15 minutes, prior to application.

According to the third aspect of the present invention, it provides use of the coating composition according to the present invention for producing a cured coating on a substrate by application of, and subsequent thermal curing of, the coating composition according to the present invention.

The coating composition of the invention preferably to use in automotive finishing for producing coatings on different substrates. Accordingly, a coating produced on a substrate using the coating composition of the invention is provided by the present invention as well.

Application of the coating composition of the invention to a substrate may be accomplished by all customary application methods, such as spraying, knife coating, spreading, pouring, dipping, impregnating, trickling or rolling. During such application, the substrate to be coated may itself be at rest, with the application unit or device being moved. Alternatively, the substrate to be coated, preferably a coil, may also be moved, with the application unit being at rest relative to the substrate being moved appropriately.

Preferably spray application methods is employed, such as compressed air spraying (pneumatic application systems), airless spraying, high-speed rotation, electrostatic spray application (ES-TA), optionally in conjunction with hot spray application such as hot air spraying.

The film thickness in the cured, dry state is preferably from 20 to 70 micrometers, preferably from 30 to 50 micrometers.

Following application and before curing of the coating composition of the invention, there may be a certain rest time or evaporation time. The rest time serves, for example, for leveling and for the devolatilization of the coating films, or for the evaporation of volatile constituents such as solvents. The rest time may be supported and/or shortened through the application of elevated temperatures and/or through a reduced atmospheric humidity, provided this does not entail any instances of damage to or alteration in the paint films, such as premature complete crosslinking, for instance.

Following application and, where practiced, the evaporation time of the coating composition of the invention on a substrate, curing takes place to form a coating.

The thermal curing of the coating composition of the invention has no peculiarities in terms of method, but instead takes place by the conventional methods such as heating in a forced-air oven or irradiation with IR lamps. The thermal curing here may also take place in stages. Another method of curing is that of curing with near infrared (NIR radiation). The thermal curing of the coating composition is preferred according to this invention. The thermal curing is in general performed at a temperature of from 40 to 190°C, preferably from 50 to 180°C and more preferably from 120 to 160°C for from 1 min to 10 h, preferably from 2 min to 5 h, more preferably from 3 min to 3 h, and even more preferably from 10 to 30 min. For the two-component coating systems, the thermal curing takes place preferably at a temperature of 80° to160°C for 20 to 60 min. With metallic substrates, the thermal curing takes place preferably at 100°C to 160°C for 20 to 40 min. With plastic substrates, the thermal curing takes place at 60 to 100°C for 30 to 60 min ("low-bake" method).

Either the substrate is coated directly (single-coat finishing) or else the coating film is formed on existing paint films that have already been applied and optionally dried and/or cured, the result then being a multicoat paint system. The substrate is preferably a metallic substrate or a plastic substrate, for example those of the kind used for producing parts for installation in or on vehicles in automobile construction, such as PP/EPDM, polyamide and/or ABS, for example. Plastic substrates are especially preferred.

In case of metal substrates, the coating is employed advantageously as part of a multicoat paint system comprising an electrocoat, a primer-surfacer coat, a basecoat, and the coating of the invention. In the case of plastic substrates, either single-coat finishes or likewise multicoat paint systems are constructed. In the latter case, the customary primer-surfacer, single-coat topcoat, basecoat, and coating compositions that can be used in plastic painting are employed, the selection and use of these compositions being known to the skilled person.

According to the final aspect of the present invention, it provides a coating layer which is produced on a substrate using the coating composition according to the present invention. After curing, this coating layer has a thickness of normally from 30 to 50 µm, preferably from 35 to 45 µm, more preferably from 38 to 42 µm. This coating layer has a very high hardness after curing. It is normally at least 110 seconds, preferably at least 120 seconds, more preferably at least 130 seconds and even more preferably at least 150 seconds, as measured according to the standard DIN EN ISO 1522.

The following non-limiting examples are included to further illustrate various embodiments of the instant disclosure and do not limit the scope of the instant disclosure.

### EMBODIMENTS

This invention provided a coating composition comprising:
a) from 25 to 50% by weight, preferably from 28 to 40% by weight, more preferably from 30 to 35%, of a polymeric binder selected from polyacrylates (A1) and/or polyesters (A2) with a crosslinkable amount of hydroxyl groups, as component (A),
b) from 15 to 25% by weight, preferably from 16 to 20% by weight, of a crosslinking agent having functional groups that are reactive to OH groups, as component (B), and
c) from 35 to 50% by weight, of at least one monomeric and/or oligomeric reactive diluent with at least one olefinic double bond, as component (C),
the weight percentage is based on the total weight of the coating composition.

Preferably, the coating composition after being cured into a coating layer has a hardness of at least 110 seconds, more preferably at least 120 seconds, even more preferably at least 130 seconds and particularly preferably at least 150 seconds, as measured according to the standard DIN EN ISO 1522.

Preferably, the polyacrylates with a crosslinkable amount of hydroxyl groups (A1) have an OH number of from 20 to 200 mg KOH/g, more preferably from 80 to 180 mg KOH/g, and even more preferably from 110 to 180 mg KOH/g; and/or, the polyesters with a crosslinkable amount of hydroxyl groups (A2) have an OH number of from 20 to 200 mg KOH/g, preferably from 80 to 180 mg KOH/g, more preferably from 120 to 180 mg KOH/g.

Preferably, the polyacrylates with a crosslinkable amount of hydroxyl groups (A1) have an acid value of from 0 to 200 mg KOH/g, more preferably from 0 to 50 mg KOH/g. Preferably, the polyesters with a crosslinkable amount of hydroxyl groups (A2) have an acid value of from 1 to 200 mg KOH/g and more preferably from 10 to 50 mg KOH/g.

Preferably, the polyacrylate with a crosslinkable amount of hydroxyl groups (A1) is a (meth)acrylate copolymer synthesized from (meth)acrylate without hydroxyl functionality, (meth)acrylate with at least one hydroxyl functionality, and optionally (meth)acrylic acid, and optionally other monomers containing at least one olefinic double bond per molecule other than the foregoing mentioned (meth)acrylates and (meth)acrylic acid.

Preferably, the (meth)acrylate without hydroxyl functionality is one or more selected from the group consisting of alkyl (meth)acrylates and cycloalkyl (meth)acrylates, such as C₁-C₁₈-alkyl (meth)acrylates and C₃-C₈-cycloalkyl (meth)acrylates, more preferably C₁-C₁₂-alkyl (meth)acrylates and C₃-C₆-cycloalkyl (meth)acrylates, even more preferably C₁-C₆-alkyl (meth)acrylates and C₅-C₆-cycloalkyl (meth)acrylates, for example, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, amyl acrylate, amyl methacrylate, hexyl acrylate, hexyl methacrylate, ethylhexyl acrylate, ethylhexyl methacrylate, 3,3,5-trimethylhexyl acrylate, 3,3,5-trimethylhexyl methacrylate, stearyl acrylate, stearyl methacrylate, lauryl acrylate, lauryl methacrylate, cyclopentyl acrylate, cyclopentyl methacrylate, isobornyl acrylate, isobornyl methacrylate, cyclohexyl acrylate, cyclohexyl methacrylate, or any combinations thereof, in particular methyl acrylate, methyl methacrylate, ethyl acrylate, ethyl methacrylate, propyl acrylate, propyl methacrylate, butyl acrylate, butyl methacrylate, ethylhexyl acrylate, or any combinations thereof.

Preferably, the (meth)acrylate with at least one hydroxyl functionality is one or more selected from the group consisting of hydroxyalkyl (meth)acrylates, more preferably hydroxyC₁-C₆-alkyl (meth)acrylates, more preferably hydroxyC₂-C₄-alkyl (meth)acrylates and even more preferably 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate, or any combinations thereof. Preferably, the (meth)acrylic acid is acrylic acid, methacrylic acid, or any combinations thereof.

Preferably, the other monomers containing at least one olefinic double bond per molecule other than the foregoing mentioned (meth)acrylates and (meth)acrylic acid is one or more selected from the group consisting of vinylaromatic hydrocarbons, such as styrene, vinyltoluene, alpha-methylstyrene, or any combinations thereof, in particular styrene, amides or nitriles of acrylic or methacrylic acid, vinyl esters, vinyl ethers, or any combinations thereof.

Preferably, the polyester with a crosslinkable amount of hydroxyl groups (A2) comprises, in the form of polycondensation monomeric units, organic polyols containing more than two hydroxyl groups per molecule and polybasic organic carboxylic acids containing two or more than two carboxyl groups or latent carboxyl groups per molecule, or consists of, in the form of polycondensation monomeric units, the foresaid organic polyols and the foresaid polybasic organic carboxylic acids.

Preferably, the organic polyol containing more than two hydroxyl groups per molecule is one or more selected from the group consisting of aliphatic polyols and aromatic polyols, more preferably one or more selected from the group consisting of aliphatic trihydric and tetrahydric alcohols and even more preferably one or more selected from the group consisting of trimethylolpropane, glycerol, and pentaerythritol.

Preferably, the polybasic organic carboxylic acid containing two or more than two carboxyl groups or latent carboxyl groups per molecule is one or more selected from the group consisting of aliphatic polycarboxylic acids and anhydrides thereof, aromatic polycarboxylic acids and anhydrides thereof, aliphatic hydroxycarboxylic acids and lactones thereof, aromatic hydroxycarboxylic acids and lactones thereof, more preferably one or more selected from the group consisting of dicarboxylic acids having from 2 to 44, more preferably from 4 to 36 carbon atoms in the molecule and anhydrides thereof, polyfunctional carboxylic acids having 3 or more carboxyl groups and anhydrides thereof, and hydroxycarboxylic acids having from 1 to 18, more preferably from 4 to 12 carbon atoms in the molecule and lactones thereof, and even more preferably one or more selected from the group consisting of o-phthalic acid, isophthalic acid, terephthalic acid, tetrahydrophthalic acid, hexahydrophthalic acid, cyclohexanedicarboxylic acid, succinic acid, adipic acid, azelaic acid, sebacic acid, maleic acid, fumaric acid, glutaric acid, hexachloroheptanedicarboxylic acid, tetrachlorophthalic acid, and anhydrides thereof, hydroxycaproic acid, hydroxybutyric acid, hydroxydecanoic acid, 12-hydroxystearic acid, and lactones thereof.

Preferably, the crosslinking agent as component (B) comprises one or more selected from the group consisting of nonblocked, partially blocked and fully blocked polyisocyanates and amino resins, preferably nonblocked polyisocyanates.

Preferably, the polyisocyanate crosslinking agent as component (B) comprises one or more selected from the group consisting of aliphatic and cycloaliphatic polyisocyanates, more preferably diisocyanates, very preferably aliphatic diisocyanates and even more preferably hexamethylene diisocyanate, dimerized hexamethylene diisocyanate, trimerized hexamethylene diisocyanate, or any combinations thereof.

Preferably, the amino resin crosslinking agent as component (B) is one or more selected from the group consisting of melamine-, benzoguanamine-, and urea-formaldehyde resins, more preferably melamine-formaldehyde resins and even more preferably melamine-formaldehyde resins etherified with an aliphatic monohydric alcohol having from 1 to 6 carbon atoms in the molecule, usually methanol, butanol, or any combinations thereof.

Preferably, the reactive diluent as component (C) is one or more selected from the group consisting of (meth)acrylic acid, mono-, di-, tri-, tetra-, penta-, and hexa(meth)acrylates, polyester (meth)acrylates, epoxy (meth)acrylates, urethane (meth)acrylates, melamine (meth)acrylates, maleic acid and its diesters and monoesters, vinyl acetate, vinyl ethers and vinylureas, more preferably one or more selected from the group consisting of di-, tri-, tetra-, penta-, and hexa(meth)acrylates and isocyanate-functional (meth)acrylates and even more preferably one or more selected from the group consisting of 1,3-butanediol di(meth)acrylate, dipropylene glycol di(meth)acrylate, tripropylene glycol di(meth)acrylate, hexanediol di(meth)acrylate, neopentyl glycol di(meth)acrylate, 2-butyl-2-ethyl-1,3-propanediol di(meth)acrylate, glycerol tri(meth)acrylate, trimethylolpropane tri(meth)acrylate, pentaerythritol tetra(meth)acrylate, dipentaerythritol tetra(meth)acrylate, dipentaerythritol hexa(meth)acrylate, di(meth)acrylates of polyalkoxylated neopentyl glycol, di(meth)acrylates of polyalkoxylated 2-butyl-2-ethyl-1,3-propanediol, tri(meth)acrylates of polyalkoxylated glycerol, tri(meth)acrylates of polyalkoxylated trimethylolpropane, tetra(meth)acrylates of polyalkoxylated pentaerythritol, and hexa(meth)acrylates of polyalkoxylated dipentaerythritol, wherein the polyalkoxylated is preferably polyethoxylated and/or polypropoxylated, more preferably trimethylolpropane tri(meth)acrylate, tripropylene glycol di(meth)acrylate, acrylated dipentaerythritol, hexanediol diacrylate, trimethylolpropane ethoxy triacrylate, isocyanate-functional (meth)acrylates, or any combinations thereof.

Preferably, the polyacrylates with a crosslinkable amount of hydroxyl groups (A1) have a number-average molecular weights Mₙ of from 1000 to 5000 g/mol, more preferably from 1500 to 4000 g/mol, and/or, have a weight-average molecular weights M_{w} of from 3000 to 20000 g/mol, more preferably from 5000 to 15000 g/mol.

Preferably, the polyesters with a crosslinkable amount of hydroxyl groups (A2) have a number-average molecular weights Mₙ of from 1000 to 5000 g/mol, more preferably from 1000 to 3000 g/mol; and/or, have a weight-average molecular weights M_{w} of from 2000 to 20000 g/mol, more preferably from 2500 to 5000 g/mol.

Preferably, the content of VOC of the coating composition is no more than 40% by weight, more preferably no more than 30% by weight, and even more preferably no more than 20% by weight.

Preferably, the two-component coating composition has component (A) being stored separately from component (B).

Preferably, the process for preparing a coating composition according to this invention is by mixing the components comprised therein.

Preferably, the use of the coating composition according to this invention for producing a cured coating layer on a substrate is by applying and subsequent thermal curing of the coating composition.

Preferably, the coating layer is produced on a substrate using the coating composition according to this invention. Preferably, the coating layer obtained after curing has a hardness of at least 110 seconds, more preferably at least 120 seconds, even more preferably at least 130 seconds and particularly preferably at least 150 seconds, as measured according to the standard DIN EN ISO 1522.

### EXAMPLES

Material information:
Laromer LR 9000: reactive diluent, isocyanate-functional acrylate, commercially available from BASF AG
Desmodur 3300: hardener, aliphatic polyisocyanate (HDI trimer), commercially available Covestro AG.
Desmodur 3370: hardener, aliphatic polyisocyanate (blocked HDI trimer), commercially available from Covestro AG
Desmodur BL 3575: hardener, aliphatic polyisocyanate (blocked HDI trimer), commercially available from Covestro AG
Luwipal 014: hardener, melamine-formaldehyde amino resin etherified with n-butanol, commercially available from BASF AG
Luwipal 018: hardener, melamine-formaldehyde amino resin etherified with n-butanol, commercially available from BASF AG
Luwipal 072: hardener, melamine-formaldehyde amino resin etherified with ethanol, commercially available from BASF AG

### Preparation Example 1: Synthesis of polyacrylates A-E

The raw materials used for synthesizing polyacrylates A-E are listed in Table 1 below. Solvent naphtha 160/180 were added in one portion into a reactor and then heated to a reaction temperature of from 100 to 200°C, preferably from 100 to 140°C, more preferably from 110 to 130°C under stirring. Initiators were dissolved in a small amount of solvent naphtha 160/180 in advance to form an initiator solution, and then from 0.1 to 5% by weight of the overall initiator solution is first dosed into the reactor over a period of from 10 to 20 mins. The rest of the initiator solution and all the monomers were dosed into the reactor over a further period of from 1 to 4 hours. After the addition of all the raw materials was completed, the reaction was kept for additional 1 to 3 hours, preferably from 1.5 to 2.5 hours. After that, the reactor was cooled down and the reaction was completed, obtaining a product mixture. After the product mixture was subjected to purification, a (meth)acrylate copolymer was obtained. The entire reaction was conducted under inert atmosphere and at a pressure of from 0 to 2 bar relative pressure.

The product information of the obtain respective polymers was summarized in Table 2 below.

**Table 1**

| Resin | Co-monomers | | | | | | | | | | Solvent /g | Initiator /g |
|---|---|---|---|---|---|---|---|---|---|---|---|---|
| | A | B | C | D | E | F | G | H | I | J | SN | DTBP |
| Polyacrylate A | 15 | 28.6 | 11.9 | 1.4 | / | / | / | / | / | / | 41.8 | 1.3 |
| Polyacrylate B | 15.7 | 27.9 | 14.5 | / | / | / | / | / | / | / | 40.6 | 1.3 |
| Polyacrylate C | 14 | 18 | 6.2 | 0.4 | 13.2 | 10.5 | / | / | / | / | 36.1 | 1.6 |
| Polyacrylate D | / | / | 9.6 | 0.4 | 5.5 | / | 20 | 15.1 | / | / | 48.5 | 0.9 |
| Polyacrylate E | / | / | 9.6 | / | / | 16.9 | / | / | 8.1 | 22.7 | 41.6 | 1.1 |

In the above table, A-I each represent the following compounds:
A: Hydroxy ethyl acrylate
B: butyl acrylate
C: styrene
D: acrylic acid
E: n-butyl methacrylate
F: butandiol monoacrylate
G: Hydroxypropyl methacrylate
H: t-butyl acrylate
I: hydroxyethyl methacrylate
J: ethylhexyl acrylate
Solvent: SN, solventnaphtha 160/180
Initiator: DTBP, di-tert-butyl peroxide

### Preparation Example 2: Synthesis of polyester F

17.4 g of Isononanoic acid, 9.4 g of Pentaerythritol, 7.4 g of Trimethylolpropane, 21.2 g of hexahydrophthalic anhydride, 43.8 g of Solventnaphtha 160/180and 0.8 g of Toluene were added into a reactor in one portion. The contents of the reactor were heated to a temperature of from 130 to 160 °C under stirring until water was generated. After that, the reactor was continuously heated to a temperature of from 200 to 250 ° until the OH value and/or acid value of reaction mixture reached the desired specifications. Then the reactor was cooled down and the reaction was completed, obtaining a product mixture. After the product mixture was subjected to purification, a polyester was obtained, which is designated as polyester F.

**Table 2**

| | Polyacrylate | | | | | Polyester |
|---|---|---|---|---|---|---|
| | A | B | C | D | E | F |
| Mn (g/mol) | 3600 | 3800 | 3400 | 2600 | 3600 | 1350 |
| Mw (g/mol) | 12500 | 11900 | 17700 | 5800 | 9600 | 3400 |
| acid value (mg KOH / g) | 19 | 1 | 10 | 11 | 1 | 12 |
| OH value (mg KOH / g) | 128 | 131 | 175 | 156 | 176 | 168 |

### Preparation and Hardness testing of coating compositions

All ingredients were mixed in amounts as indicated in Table 3 and stirred with a stirrer at room temperature, obtaining inventive coating compositions 1-10. All ingredients were mixed in amounts as indicated in Table 4 and stirred with a stirrer at room temperature, obtaining comparative coating compositions 11-16. The coating compositions 1-10 and comparative coating compositions 11-16 each were doctor-bladed on a tin-pretreated iron pane. The panel then was heated in an oven at a temperature ranging from 120 to 160°C for 10~30 min for curing, obtaining a coating film with a thickness of from 38 to 42 µm. After storing the panel at 23°C and at 50% relative humidity for 48 hours, hardness was measured with Konig pendulmn according to DIN EN ISO 1522. The results of hardness were also given in Table 3.

**Table 3**

| Ingredients (parts by weight) | Example | | | | | | | | | | Comparative Example | | | | | |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 |
| Laromer LR 9000 | / | / | 6.6 | / | 5.6 | / | 1.1 | / | / | 3.7 | / | / | 4.6 | / | 8.1 | / |
| Trimethylolpropane triacrylate | 6.7 | / | 13.5 | / | 12.3 | 18.6 | 18.6 | 9.9 | 7.9 | 10.6 | 22.5 | / | 8.5 | / | 16.4 | 26.6 |
| Tripropylene glycol diacrylate | / | / | / | 15.0 | / | 10.3 | / | 11.7 | / | 32.5 | / | / | / | 15.0 | / | 15.4 |
| Acrylated dipentaerythritol | 17.6 | 19.6 | 4.4 | 5.5 | 9.9 | 2.2 | 2.3 | 3.3 | 1.2 | / | 14.4 | 25.8 | 2.1 | 5.5 | 14.3 | 9.6 |
| Hexane-1,6-diol diacrylate | 18.2 | 17.0 | 18.9 | 8.3 | 9.9 | 6.7 | 10.8 | 15.3 | 8.3 | / | / | 10.2 | / | 6.2 | / | / |
| Trimethylolpropane ethoxy triacrylate | / | 12.1 | / | 6.2 | / | / | / | / | 26.3 | / | / | 16.4 | / | / | / | / |
| Desmodur 3300 | / | 16.5 | / | / | / | / | / | / | 8.9 | / | / | / | / | 12.7 | / | / |
| Desmodur 3370 | / | / | / | 23.4 | / | / | 14.2 | 5.2 | / | / | / | / | 21.3 | / | / | / |
| Desmodur 3575 | / | / | 23.6 | / | / | / | 9.7 | 3.6 | / | / | / | / | / | / | 11.6 | / |
| Desmodur 4470 | / | / | / | / | 11.6 | / | / | / | 11.5 | 11.7 | 15.8 | / | / | / | 6.9 | 8.2 |
| Luwipal 014 | 20.8 | / | / | / | 6.9 | 8.2 | / | 7.2 | / | 5.7 | / | / | / | / | 5.6 | 16.4 |
| Luwipal 018 | / | / | / | / | 5.6 | 16.4 | / | 6.6 | / | / | / | / | / | / | / | / |
| Luwpial 072 | / | / | / | / | / | / | / | / | / | 2.8 | / | / | / | / | / | / |
| Polyacrylate A | / | / | 19.7 | / | / | / | / | 12.6 | 2.8 | 18.2 | / | / | 25.6 | / | / | / |
| Polyacrylate B | 20.0 | / | / | 8.8 | 3.2 | 20.9 | 22.1 | 9.2 | / | / | 12.8 | / | / | 11.1 | 1.9 | 11.5 |

| Ingredients (parts by weight) | Example | | | | | | | | | | Comparative Example | | | | | |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 |
| Polyester F | 16.7 | 29.4 | 10.4 | 17.7 | 16.8 | 13.1 | 18.6 | / | / | 8.6 | 13.2 | 23.7 | 13.5 | 22.3 | 10.1 | 7.2 |
| Polyacrylate C | / | / | / | 15.0 | / | / | 2.6 | / | 22.6 | / | / | / | / | 18.9 | / | / |
| Polyacrylate D | / | 5.4 | 2.9 | / | 9.8 | 3.6 | / | / | / | / | / | 3.3 | 12.2 | / | 5.9 | 2.0 |
| Polyacrylate E | / | / | / | / | 8.4 | / | / | 15.4 | 10.5 | 6.2 | / | / | / | / | 5.0 | / |
| Polyacrylate F | / | / | / | / | / | / | / | / | / | / | / | / | / | / | / | / |
| Sum (parts by weight) | 100 | 100 | 100 | 100 | 100 | 100 | 100 | 100 | 100 | 100 | 100 | 100 | 100 | 100 | 100 | 100 |
| Film performance test Hardness (seconds) | 156 | 179 | 183 | 125 | 146 | 139 | 162 | 171 | 124 | 118 | 62 | 77 | 52 | 84 | 91 | 86 |

It can be seen from the data shown in Table 3 that when the content of resin binder as component (A) is less than 25% by weight or more than 50% by weight, the content of hardener as component (B) is less than 15% by weight, or the content of reactive diluent as component (C) is less than 35% by weight or more than 50% by weight, the hardness of the obtained coating layers are significantly lower than each of those obtained from the coating compositions of this invention.

## Claims

1. A coating composition comprising
a) from 25 to 50% by weight, preferably from 28 to 40% by weight, more preferably from 30 to 35%, of a polymeric binder selected from polyacrylates (A1) and/or polyesters (A2) with a crosslinkable amount of hydroxyl groups, as component (A),
b) from 15 to 25% by weight, preferably from 16 to 20% by weight, of a crosslinking agent having functional groups that are reactive to OH groups, as component (B), and
c) from 35 to 50% by weight, of at least one monomeric and/or oligomeric reactive diluent with at least one olefinic double bond, as component (C),
the weight percentage is based on the total weight of the coating composition.

2. The coating composition according to claim 1, wherein the polyacrylates with a crosslinkable amount of hydroxyl groups (A1) have an OH number of from 20 to 200 mg KOH/g, preferably from 80 to 180 mg KOH/g, more preferably from 110 to 180 mg KOH/g; and/or, the polyesters with a crosslinkable amount of hydroxyl groups (A2) have an OH number of from 20 to 200 mg KOH/g, preferably from 80 to 180 mg KOH/g, more preferably from 120 to 180 mg KOH/g; where the OH number is as determined experimentally by titration in accordance with DIN 53240-2; Determination of hydroxyl value - Part 2: Method with catalyst.

3. The coating composition according to any one of claims 1 or 2, wherein the polyacrylates with a crosslinkable amount of hydroxyl groups (A1) have an acid value of from 0 to 200 mg KOH/g, preferably from 0 to 50 mg KOH/g; and/or, the polyesters with a crosslinkable amount of hydroxyl groups (A2) have an acid value of from 1 to 200 mg KOH/g, preferably from 10 to 50 mg KOH/g;
where the acid value is as determined by dissolving a known amount of a sample in an organic solvent and titration with a solution of potassium hydroxide of a known concentration using phenolphthalein as a color indicator.

4. The coating composition according to any one of claims 1 to 3, wherein the polyacrylate with a crosslinkable amount of hydroxyl groups (A1) is a (meth)acrylate copolymer synthesized from (meth)acrylate without hydroxyl functionality, (meth)acrylate with at least one hydroxyl functionality, and optionally (meth)acrylic acid, and optionally other monomers containing at least one olefinic double bond per molecule other than the foregoing mentioned (meth)acrylates and (meth)acrylic acid.

5. The coating composition according to claim 4, wherein the (meth)acrylate without hydroxyl functionality is one or more selected from the group consisting of alkyl (meth)acrylates and cycloalkyl (meth)acrylates, such as C₁-C₁₈-alkyl (meth)acrylates and C₃-C₈-cycloalkyl (meth)acrylates, preferably C₁-C₁₂-alkyl (meth)acrylates and C₃-C₆-cycloalkyl (meth)acrylates, particularly preferably C₁-C₆-alkyl (meth)acrylates and C₅-C₆-cycloalkyl (meth)acrylates, for example, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, amyl acrylate, amyl methacrylate, hexyl acrylate, hexyl methacrylate, ethylhexyl acrylate, ethylhexyl methacrylate, 3,3,5-trimethylhexyl acrylate, 3,3,5-trimethylhexyl methacrylate, stearyl acrylate, stearyl methacrylate, lauryl acrylate, lauryl methacrylate, cyclopentyl acrylate, cyclopentyl methacrylate, isobornyl acrylate, isobornyl methacrylate, cyclohexyl acrylate, cyclohexyl methacrylate, or any combinations thereof, in particular methyl acrylate, methyl methacrylate, ethyl acrylate, ethyl methacrylate, propyl acrylate, propyl methacrylate, butyl acrylate, butyl methacrylate, ethylhexyl acrylate, or any combinations thereof; and/or the (meth)acrylate with at least one hydroxyl functionality is one or more selected from the group consisting of hydroxyalkyl (meth)acrylates, preferably hydroxyC₁-C₆-alkyl (meth)acrylates, more preferably hydroxyC₂-C₄-alkyl (meth)acrylates, particularly preferably 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate, or any combinations thereof; and/or the (meth)acrylic acid is acrylic acid, methacrylic acid, or any combinations thereof; and/or the other monomers containing at least one olefinic double bond per molecule other than the foregoing mentioned (meth)acrylates and (meth)acrylic acid is one or more selected from the group consisting of vinylaromatic hydrocarbons, such as styrene, vinyltoluene, alpha-methylstyrene, or any combinations thereof, in particular styrene, amides or nitriles of acrylic or methacrylic acid, vinyl esters, vinyl ethers, or any combinations thereof.

6. The coating composition according to any one of claims 1 to 5, wherein the polyester with a crosslinkable amount of hydroxyl groups (A2) comprises, in the form of polycondensation monomeric units, organic polyols containing more than two hydroxyl groups per molecule and polybasic organic carboxylic acids containing two or more than two carboxyl groups or latent carboxyl groups per molecule, or consists of, in the form of polycondensation monomeric units, the foresaid organic polyols and the foresaid polybasic organic carboxylic acids.

7. The coating composition according to claim 6, wherein the organic polyol containing more than two hydroxyl groups per molecule is one or more selected from the group consisting of aliphatic polyols and aromatic polyols, preferably one or more selected from the group consisting of aliphatic trihydric and tetrahydric alcohols, more particularly one or more selected from the group consisting of trimethylolpropane, glycerol, and pentaerythritol; and/or the polybasic organic carboxylic acid containing two or more than two carboxyl groups or latent carboxyl groups per molecule is one or more selected from the group consisting of aliphatic polycarboxylic acids and anhydrides thereof, aromatic polycarboxylic acids and anhydrides thereof, aliphatic hydroxycarboxylic acids and lactones thereof, aromatic hydroxycarboxylic acids and lactones thereof, preferably one or more selected from the group consisting of dicarboxylic acids having from 2 to 44, preferably from 4 to 36 carbon atoms in the molecule and anhydrides thereof, polyfunctional carboxylic acids having 3 or more carboxyl groups and anhydrides thereof, and hydroxycarboxylic acids having from 1 to 18, preferably from 4 to 12 carbon atoms in the molecule and lactones thereof, more preferably one or more selected from the group consisting of o-phthalic acid, isophthalic acid, terephthalic acid, tetrahydrophthalic acid, hexahydrophthalic acid, cyclohexanedicarboxylic acid, succinic acid, adipic acid, azelaic acid, sebacic acid, maleic acid, fumaric acid, glutaric acid, hexachloroheptanedicarboxylic acid, tetrachlorophthalic acid, and anhydrides thereof, hydroxycaproic acid, hydroxybutyric acid, hydroxydecanoic acid, 12-hydroxystearic acid, and lactones thereof.

8. The coating composition according to any of claims 1 to 7, wherein the crosslinking agent as component (B) comprises one or more selected from the group consisting of nonblocked, partially blocked and fully blocked polyisocyanates and amino resins, preferably nonblocked polyisocyanates.

9. The coating composition according to claim 8, wherein the polyisocyanate crosslinking agent as component (B) comprises one or more selected from the group consisting of aliphatic and cycloaliphatic polyisocyanates, preferably diisocyanates, very preferably aliphatic diisocyanates, more particularly hexamethylene diisocyanate, dimerized hexamethylene diisocyanate, trimerized hexamethylene diisocyanate, or any combinations thereof; and/or the amino resin crosslinking agent as component (B) is one or more selected from the group consisting of melamine-, benzoguanamine-, and urea-formaldehyde resins, preferably melamine-formaldehyde resins, more particularly melamine-formaldehyde resins etherified with an aliphatic monohydric alcohol having from 1 to 6 carbon atoms in the molecule, usually methanol, butanol, or any combinations thereof.

10. The coating composition according to any one of claims 1 to 9, wherein the reactive diluent as component (C) is one or more selected from the group consisting of (meth)acrylic acid, mono-, di-, tri-, tetra-, penta-, and hexa(meth)acrylates, polyester (meth)acrylates, epoxy (meth)acrylates, urethane (meth)acrylates, melamine (meth)acrylates, maleic acid and its diesters and monoesters, vinyl acetate, vinyl ethers and vinylureas, preferably one or more selected from the group consisting of di-, tri-, tetra-, penta-, and hexa(meth)acrylates and isocyanate-functional (meth)acrylates; more preferably one or more selected from the group consisting of 1,3-butanediol di(meth)acrylate, dipropylene glycol di(meth)acrylate, tripropylene glycol di(meth)acrylate, hexanediol di(meth)acrylate, neopentyl glycol di(meth)acrylate, 2-butyl-2-ethyl-1,3-propanediol di(meth)acrylate, glycerol tri(meth)acrylate, trimethylolpropane tri(meth)acrylate, pentaerythritol tetra(meth)acrylate, dipentaerythritol tetra(meth)acrylate, dipentaerythritol hexa(meth)acrylate, di(meth)acrylates of polyalkoxylated neopentyl glycol, di(meth)acrylates of polyalkoxylated 2-butyl-2-ethyl-1,3-propanediol, tri(meth)acrylates of polyalkoxylated glycerol, tri(meth)acrylates of polyalkoxylated trimethylolpropane, tetra(meth)acrylates of polyalkoxylated pentaerythritol, and hexa(meth)acrylates of polyalkoxylated dipentaerythritol, wherein the polyalkoxylated is preferably polyethoxylated and/or polypropoxylated, in particular trimethylolpropane tri(meth)acrylate, tripropylene glycol di(meth)acrylate, acrylated dipentaerythritol, hexanediol diacrylate, trimethylolpropane ethoxy triacrylate, isocyanate-functional (meth)acrylates, or any combinations thereof.

11. The coating composition according to any of claims 1 to 10, wherein the polyacrylates with a crosslinkable amount of hydroxyl groups (A1) have a number-average molecular weights Mₙ of from 1000 to 5000 g/mol, preferably from 1500 to 4000 g/mol, and/or, have a weight-average molecular weights M_{w} of from 3000 to 20000 g/mol, preferably from 5000 to 15000 g/mol; and/or the polyesters with a crosslinkable amount of hydroxyl groups (A2) have a number-average molecular weights Mₙ of from 1000 to 5000 g/mol, preferably from 1000 to 3000 g/mol; and/or, have a weight-average molecular weights M_{w} of from 2000 to 20000 g/mol, preferably from 2500 to 5000 g/mol;
where the number-average and weight-average molecular weights are as determined by gel permeation chromatography using polystyrene standards.

12. The coating composition according to any of claims 1 to 11, wherein it is a two-component coating composition, with component (A) being stored separately from component (B).

13. A process for preparing a coating composition according to any of claims claim 1 to 11 by mixing the components comprised therein.

14. Use of the coating composition according to any of claims 1 to 12 for producing a cured coating layer on a substrate by application of and subsequent thermal curing, of the coating composition according to any of claims 1 to 12.

15. A coating layer which is produced on a substrate using the coating composition according to any one of claims 1 to 12.

## Patentansprüche

1. Beschichtungszusammensetzung, umfassend
a) 25 bis 50 Gew.-%, vorzugsweise 28 bis 40 Gew.-%, weiter bevorzugt 30 bis 35 %, eines polymeren Bindemittels, das aus Polyacrylaten (A1) und/oder Polyestern (A2) mit einer vernetzbaren Menge an Hydroxylgruppen ausgewählt ist, als Komponente (A),
b) 15 bis 25 Gew.-%, vorzugsweise 16 bis 20 Gew.-%, eines Vernetzungsmittels mit funktionellen Gruppen, die gegenüber OH-Gruppen reaktiv sind, als Komponente (B) und
c) 35 bis 50 Gew.-% mindestens eines monomeren und/oder oligomeren Reaktivverdünnungsmittels mit mindestens einer olefinischen Doppelbindung als Komponente (C),
wobei sich die Gewichtsprozentangabe auf das Gesamtgewicht der Beschichtungszusammensetzung bezieht.

2. Beschichtungszusammensetzung nach Anspruch 1, wobei die Polyacrylate mit einer vernetzbaren Menge an Hydroxylgruppen (A1) eine OH-Zahl von 20 bis 200 mg KOH/g, vorzugsweise von 80 bis 180 mg KOH/g, weiter bevorzugt von 110 bis 180 mg KOH/g, aufweisen und/oder die Polyester mit einer vernetzbaren Menge an Hydroxylgruppen (A2) eine OH-Zahl von 20 bis 200 mg KOH/g, vorzugsweise von 80 bis 180 mg KOH/g, weiter bevorzugt von 120 bis 180 mg KOH/g, aufweisen; wobei die OH-Zahl durch Titration gemäß DIN 53240-2; Bestimmung der Hydroxylzahl - Teil 2: Verfahren mit Katalysator; experimentell bestimmt wird.

3. Beschichtungszusammensetzung nach Anspruch 1 oder 2, wobei die Polyacrylate mit einer vernetzbaren Menge an Hydroxylgruppen (A1) eine Säurezahl von 0 bis 200 mg KOH/g, vorzugsweise von 0 bis 50 mg KOH/g, aufweisen und/oder die Polyester mit einer vernetzbaren Menge an Hydroxylgruppen (A2) eine Säurezahl von 1 bis 200 mg KOH/g, vorzugsweise von 10 bis 50 mg KOH/g, aufweisen; wobei die Säurezahl durch Lösen einer bekannten Menge einer Probe in einem organischen Lösungsmittel und Titration mit einer Lösung von Kaliumhydroxid bekannter Konzentration unter Verwendung von Phenolphthalein als Farbindikator bestimmt wird.

4. Beschichtungszusammensetzung nach einem der Ansprüche 1 bis 3, wobei es sich bei dem Polyacrylat mit einer vernetzbaren Menge an Hydroxylgruppen (A1) um ein aus (Meth)acrylat ohne Hydroxylfunktionalität, (Meth)acrylat mit mindestens einer Hydroxylfunktionalität und gegebenenfalls (Meth)acrylsäure und gegebenenfalls anderen Monomeren mit mindestens einer olefinischen Doppelbindung pro Molekül, die von den oben genannten (Meth)acrylaten und der oben genannten (Meth)acrylsäure verschieden sind, synthetisiertes (Meth)acrylatcopolymer handelt.

5. Beschichtungszusammensetzung nach Anspruch 4, wobei es sich bei dem (Meth)acrylat ohne Hydroxylfunktionalität um eines oder mehrere ausgewählt aus der Gruppe bestehend aus Alkyl(meth)acrylaten und Cycloalkyl(meth)acrylaten, wie C₁-C₁₈-Alkyl (meth) acrylaten und C₃-C₈-Cycloalkyl (meth) acrylaten, vorzugsweise C₁-C₁₂-Alkyl (meth) acrylaten und C₃-C₆-Cycloalkyl(meth)acrylaten, besonders bevorzugt C₁-C₆-Alkyl (meth) acrylaten und C₅-C₆-Cycloalkyl(meth)acrylaten, beispielsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert.-Butylacrylat, tert.-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat, Laurylmethacrylat, Cyclopentylacrylat, Cyclopentylmethacrylat, Isobornylacrylat, Isobornylmethacrylat, Cyclohexylacrylat, Cyclohexylmethacrylat oder beliebigen Kombinationen davon, insbesondere Methylacrylat, Methylmethacrylat, Ethylacrylat, Ethylmethacrylat, Propylacrylat, Propylmethacrylat, Butylacrylat, Butylmethacrylat, Ethylhexylacrylat oder beliebigen Kombinationen davon handelt; und/oder es sich bei dem (Meth)acrylat mit mindestens einer Hydroxylfunktionalität um eines oder mehrere ausgewählt aus der Gruppe bestehend aus Hydroxyalkyl(meth)acrylaten, bevorzugt Hydroxy-C₁-C₆-alkyl (meth)acrylaten, weiter bevorzugt Hydroxy-C₂-C₄-alkyl(meth)acrylaten, besonders bevorzugt 2-Hydroxyethylacrylat, 2-Hydroxyethylmethacrylat, 2-Hydroxypropylacrylat, 2-Hydroxypropylmethacrylat, 3-Hydroxybutylacrylat, 3-Hydroxypropylmethacrylat, 3-Hydroxybutylacrylat, 3-Hydroxybutylmethacrylat oder beliebigen Kombinationen davon, handelt; und/oder es sich bei der (Meth)acrylsäure um Acrylsäure, Methacrylsäure oder beliebige Kombinationen davon handelt; und/oder es sich bei den anderen Monomeren mit mindestens einer olefinischen Doppelbindung pro Molekül, die von den oben genannten (Meth)acrylaten und der oben genannten (Meth)acrylsäure verschieden sind, um eines oder mehrere ausgewählt aus der Gruppe bestehend aus vinylaromatischen Kohlenwasserstoffen, wie Styrol, Vinyltoluol, alpha-Methylstyrol oder beliebigen Kombinationen davon, insbesondere Styrol, Amiden oder Nitrilen der Acryl- oder Methacrylsäure, Vinylestern, Vinylethern oder beliebigen Kombinationen davon, handelt.

6. Beschichtungszusammensetzung nach einem der Ansprüche 1 bis 5, wobei der Polyester mit einer vernetzbaren Menge an Hydroxylgruppen (A2) organische Polyole mit mehr als zwei Hydroxylgruppen pro Molekül und mehrbasige organische Carbonsäuren mit zwei oder mehr als zwei Carboxylgruppen oder latenten Carboxylgruppen pro Molekül in Form von monomeren Polykondensationseinheiten umfasst, oder aus den oben genannten organischen Polyolen und den oben genannten mehrbasigen organischen Carbonsäuren in Form von monomeren Polykondensationseinheiten besteht.

7. Beschichtungszusammensetzung nach Anspruch 6, wobei es sich bei dem organischen Polyol mit mehr als zwei Hydroxylgruppen pro Molekül um eines oder mehrere ausgewählt aus der Gruppe bestehend aus aliphatischen Polyolen und aromatischen Polyolen, vorzugsweise eines oder mehrere ausgewählt aus der Gruppe bestehend aus aliphatischen dreiwertigen und vierwertigen Alkoholen, spezieller eines oder mehrere ausgewählt aus der Gruppe bestehend aus Trimethylolpropan, Glycerin und Pentaerythritol, handelt; und/oder es sich bei der mehrbasigen organischen Carbonsäure mit zwei oder mehr als zwei Carboxylgruppen oder latenten Carboxylgruppen pro Molekül um eines oder mehrere ausgewählt aus der Gruppe bestehend aus aliphatischen Polycarbonsäuren und Anhydriden davon, aromatischen Polycarbonsäuren und Anhydriden davon, aliphatischen Hydroxycarbonsäuren und Lactonen davon, aromatischen Hydroxycarbonsäuren und Lactonen davon, vorzugsweise eines oder mehrere ausgewählt aus der Gruppe bestehend aus Dicarbonsäuren mit 2 bis 44, vorzugsweise 4 bis 36, Kohlenstoffatomen im Molekül und Anhydriden davon, polyfunktionellen Carbonsäuren mit 3 oder mehr Carboxylgruppen und Anhydriden davon und Hydroxycarbonsäuren mit 1 bis 18, vorzugsweise 4 bis 12, Kohlenstoffatomen im Molekül und Lactonen davon, weiter bevorzugt eines oder mehrere ausgewählt aus der Gruppe bestehend aus o-Phthalsäure, Isophthalsäure, Terephthalsäure, Tetrahydrophthalsäure, Hexahydrophthalsäure, Cyclohexandicarbonsäure, Bernsteinsäure, Adipinsäure, Azelainsäure, Sebacinsäure, Maleinsäure, Fumarsäure, Glutarsäure, Hexachlorheptandicarbonsäure, Tetrachlorphthalsäure und Anhydriden davon, Hydroxycapronsäure, Hydroxybuttersäure, Hydroxydecansäure, 12-Hydroxystearinsäure und Lactonen davon, handelt.

8. Beschichtungszusammensetzung nach einem der Ansprüche 1 bis 7, wobei das Vernetzungsmittel als Komponente (B) eines oder mehrere ausgewählt aus der Gruppe bestehend aus nicht blockierten, teilweise blockierten und vollständig blockierten Polyisocyanaten und Aminoharzen, vorzugsweise nicht blockierten Polyisocyanaten, umfasst.

9. Beschichtungszusammensetzung nach Anspruch 8, wobei das Polyisocyanatvernetzungsmittel als Komponente (B) eines oder mehrere ausgewählt aus der Gruppe bestehend aus aliphatischen und cycloaliphatischen Polyisocyanaten, vorzugsweise Diisocyanaten, besonders bevorzugt aliphatischen Diisocyanaten, spezieller Hexamethylendiisocyanat, dimerisiertem Hexamethylendiisocyanat, trimerisiertem Hexamethylendiisocyanat oder beliebigen Kombinationen davon, umfasst; und/oder es sich bei dem Aminoharzvernetzungsmittel als Komponente (B) um eines oder mehrere ausgewählt aus der Gruppe bestehend aus Melamin-, Benzoguanamin- und Harnstoff-Formaldehydharzen, vorzugsweise Melamin-FormaldehydHarzen, spezieller mit einem aliphatischen einwertigen Alkohol mit 1 bis 6 Kohlenstoffatomen im Molekül, üblicherweise Methanol, Butanol oder beliebigen Kombinationen davon, veretherten Melamin-FormaldehydHarzen, handelt.

10. Beschichtungszusammensetzung nach einem der Ansprüche 1 bis 9, wobei es sich bei dem Reaktivverdünnungsmittel als Komponente (C) um eines oder mehrere ausgewählt aus der Gruppe bestehend aus (Meth)acrylsäure, Mono-, Di-, Tri-, Tetra-, Penta- und Hexa(meth)acrylaten, Polyester(meth)acrylaten, Epoxy(meth)acrylaten, Urethan(meth)acrylaten, Melamin (meth) acrylaten, Maleinsäure und deren Diestern und Monoestern, Vinylacetat, Vinylethern und Vinylharnstoffen, vorzugsweise eines oder mehrere ausgewählt aus der Gruppe bestehend aus Di-, Tri-, Tetra-, Penta- und Hexa(meth)acrylaten und isocyanatfunktionellen (Meth)acrylaten; weiter bevorzugt eines oder mehrere ausgewählt aus der Gruppe bestehend aus 1,3-Butandioldi(meth)acrylat, Dipropylenglykoldi(meth)acrylat, Tripropylenglykoldi(meth)acrylat, Hexandioldi(meth)acrylat, Neopentylglykoldi(meth)acrylat, 2-Butyl-2-ethyl-1,3-propandioldi(meth)acrylat, Glycerintri(meth)acrylat, Trimethylolpropantri(meth)acrylat, Pentaerythritoltetra(meth)acrylat, Dipentaerythritoltetra(meth)acrylat, Dipentaerythritolhexa(meth)acrylat, Di(meth)acrylaten von polyalkoxyliertem Neopentylglykol, Di(meth)acrylaten von polyalkoxyliertem 2-Butyl-2-ethyl-1,3-propandiol, Tri(meth)acrylaten von polyalkoxyliertem Glycerin, Tri(meth)acrylaten von polyalkoxyliertem Trimethylolpropan, Tetra(meth)acrylaten von polyalkoxyliertem Pentaerythritol und Hexa(meth)acrylaten von polyalkoxyliertem Dipentaerythritol, wobei das polyalkoxyliert vorzugsweise polyethoxyliert und/oder polypropoxyliert ist, insbesondere Trimethylolpropantri(meth)acrylat, Tripropylenglykoldi(meth)acrylat, acryliertem Dipentaerythritol, Hexandioldiacrylat, Trimethylolpropanethoxytriacrylat, isocyanatfunktionellen (Meth)acrylaten oder beliebigen Kombinationen davon, handelt.

11. Beschichtungszusammensetzung nach einem der Ansprüche 1 bis 10, wobei die Polyacrylate mit einer vernetzbaren Menge an Hydroxylgruppen (A1) ein zahlenmittleres Molekulargewicht Mₙ von 1000 bis 5000 g/mol, vorzugsweise von 1500 bis 4000 g/mol, und/oder ein gewichtsmittleres Molekulargewicht M_{w} von 3000 bis 20.000 g/mol, vorzugsweise von 5000 bis 15.000 g/mol, aufweisen und/oder die Polyester mit einer vernetzbaren Menge an Hydroxylgruppen (A2) ein zahlenmittleres Molekulargewicht Mₙ von 1000 bis 5000 g/mol, vorzugsweise von 1000 bis 3000 g/mol, und/oder ein gewichtsmittleres Molekulargewicht M_{w} von 2000 bis 20.000 g/mol, vorzugsweise von 2500 bis 5000 g/mol, aufweisen;
wobei die zahlenmittleren und gewichtsmittleren Molekulargewichte durch Gelpermeationschromatographie unter Verwendung von Polystyrolstandards bestimmt werden.

12. Beschichtungszusammensetzung nach einem der Ansprüche 1 bis 11, bei der es sich um eine Zweikomponenten-Beschichtungszusammensetzung handelt, wobei Komponente (A) getrennt von Komponente (B) gelagert wird.

13. Verfahren zur Herstellung einer Beschichtungszusammensetzung nach einem der Ansprüche 1 bis 11 durch Vermischen der darin enthaltenen Komponenten.

14. Verwendung der Beschichtungszusammensetzung nach einem der Ansprüche 1 bis 12 zur Herstellung einer gehärteten Beschichtungsschicht auf einem Substrat durch Aufbringen und anschließende thermische Härtung der Beschichtungszusammensetzung nach einem der Ansprüche 1 bis 12.

15. Beschichtungsschicht, hergestellt auf einem Substrat unter Verwendung der Beschichtungszusammensetzung nach einem der Ansprüche 1 bis 12.

## Revendications

1. Composition de revêtement comprenant
a) de 25 à 50 % en poids, de préférence de 28 à 40 % en poids, plus préférablement de 30 à 35 %, d'un liant polymérique choisi parmi les polyacrylates (A1) et/ou les polyesters (A2) comportant une quantité réticulable de groupes hydroxyle, en tant que composant (A),
b) de 15 à 25 % en poids, de préférence de 16 à 20 % en poids, d'un agent de réticulation ayant des groupes fonctionnels qui sont réactifs vis-à-vis de groupes OH, en tant que composant (B), et
c) de 35 à 50 % en poids d'au moins un diluant réactif monomérique et/ou oligomérique comportant au moins une double liaison oléfinique, en tant que composant (C),
le pourcentage en poids étant basé sur le poids total de la composition de revêtement.

2. Composition de revêtement selon la revendication 1, dans laquelle les polyacrylates comportant une quantité réticulable de groupes hydroxyle (A1) ont un indice d'OH de 20 à 200 mg de KOH/g, de préférence de 80 à 180 mg de KOH/g, plus préférablement de 110 à 180 mg de KOH/g ; et/ou, les polyesters comportant une quantité réticulable de groupes hydroxyle (A2) ont un indice d'OH de 20 à 200 mg de KOH/g, de préférence de 80 à 180 mg de KOH/g, plus préférablement de 120 à 180 mg de KOH/g ; l'indice d'OH étant déterminé expérimentalement par titrage selon la norme DIN 53240-2 ; Détermination de l'indice d'hydroxyle - partie 2 : procédé avec catalyseur.

3. Composition de revêtement selon l'une quelconque des revendications 1 ou 2, dans laquelle les polyacrylates comportant une quantité réticulable de groupes hydroxyle (A1) ont un indice d'acide de 0 à 200 mg de KOH/g, de préférence de 0 à 50 mg de KOH/g ; et/ou les polyesters comportant une quantité réticulable de groupes hydroxyle (A2) ont un indice d'acide de 1 à 200 mg de KOH/g, de préférence de 10 à 50 mg de KOH/g ;
où l'indice d'acide est déterminé par dissolution d'une quantité connue d'un échantillon dans un solvant organique et titrage avec une solution d'hydroxyde de potassium d'une concentration connue en utilisant de la phénolphtaléine comme indicateur coloré.

4. Composition de revêtement selon l'une quelconque des revendications 1 à 3, dans laquelle le polyacrylate comportant une quantité réticulable de groupes hydroxyle (A1) est un copolymère de (méth)acrylate synthétisé à partir de (méth)acrylate sans fonctionnalité hydroxyle, de (méth)acrylate comportant au moins une fonctionnalité hydroxyle, et éventuellement de l'acide (méth)acrylique, et éventuellement d'autres monomères contenant au moins une double liaison oléfinique par molécule autres que les (méth)acrylates et l'acide (méth)acrylique mentionnés ci-dessus.

5. Composition de revêtement selon la revendication 4, dans laquelle le (méth)acrylate sans fonctionnalité hydroxyle est un ou plusieurs choisis dans le groupe constitué par les (méth)acrylates d'alkyle et les (méth)acrylates de cycloalkyle, tels que les (méth)acrylates d'alkyle en C₁-C₁₈ et les (méth)acrylates de cycloalkyle en C₃-C₈, de préférence les (méth)acrylates d'alkyle en C₁-C₁₂ et les (méth)acrylates de cycloalkyle en C₃-C₆, de manière particulièrement préférée les (méth)acrylates d'alkyle en C₁-C₆ et les (méth)acrylates de cycloalkyle en C₅-C₆, par exemple l'acrylate d'éthyle, le méthacrylate d'éthyle, l'acrylate de propyle, le méthacrylate de propyle, l'acrylate d'isopropyle, le méthacrylate d'isopropyle, l'acrylate de butyle, le méthacrylate de butyle, l'acrylate d'isobutyle, le méthacrylate d'isobutyle, l'acrylate de tert-butyle, le méthacrylate de tert-butyle, l'acrylate d'amyle, le méthacrylate d'amyle, l'acrylate d'hexyle, le méthacrylate d'hexyle, l'acrylate d'éthylhexyle, le méthacrylate d'éthylhexyle, l'acrylate de 3,3,5-triméthylhexyle, le méthacrylate de 3,3,5-triméthylhexyle, l'acrylate de stéaryle, le méthacrylate de stéaryle, l'acrylate de lauryle, le méthacrylate de lauryle, l'acrylate de cyclopentyle, le méthacrylate de cyclopentyle, l'acrylate d'isobornyle, le méthacrylate d'isobornyle, l'acrylate de cyclohexyle, le méthacrylate de cyclohexyle, ou toutes combinaisons correspondantes, en particulier l'acrylate de méthyle, le méthacrylate de méthyle, l'acrylate d'éthyle, le méthacrylate d'éthyle, l'acrylate de propyle, le méthacrylate de propyle, l'acrylate de butyle, le méthacrylate de butyle, l'acrylate d'éthylhexyle, ou toutes combinaisons correspondantes ; et/ou le (méth)acrylate comportant au moins une fonctionnalité hydroxyle est un ou plusieurs choisis dans le groupe constitué par les (méth)acrylates d'hydroxyalkyle, de préférence les (méth)acrylates d'hydroxyalkyle en C₁-C₆, plus préférablement les (méth)acrylates d'hydroxyalkyle en C₂-C₄, de manière particulièrement préférée l'acrylate de 2-hydroxyéthyle, le méthacrylate de 2-hydroxyéthyle, l'acrylate de 2-hydroxypropyle, le méthacrylate de 2-hydroxypropyle, l'acrylate de 3-hydroxypropyle, le méthacrylate de 3-hydroxypropyle, l'acrylate de 3-hydroxybutyle, le méthacrylate de 3-hydroxybutyle, ou toutes combinaisons correspondantes ; et/ou l'acide (méth)acrylique est l'acide acrylique, l'acide méthacrylique ou toutes combinaisons correspondantes ; et/ou les autres monomères contenant au moins une double liaison oléfinique par molécule autres que les (méth)acrylates et l'acide (méth)acrylique mentionnés ci-dessus sont un ou plusieurs choisis dans le groupe constitué par les hydrocarbures vinylaromatiques, tels que le styrène, un vinyltoluène, l'alpha-méthylstyrène, ou toutes combinaisons correspondantes, en particulier le styrène, les amides ou nitriles d'acide acrylique ou méthacrylique, les esters vinyliques, les éthers vinyliques, ou toutes combinaisons correspondantes.

6. Composition de revêtement selon l'une quelconque des revendications 1 à 5, dans laquelle le polyester comportant une quantité réticulable de groupes hydroxyle (A2) comprend, sous forme de motifs monomériques de polycondensation, des polyols organiques contenant plus de deux groupes hydroxyle par molécule et des acides carboxyliques organiques polybasiques contenant deux ou plus de deux groupes carboxyle ou groupes carboxyle latents par molécule, ou est constitué, sous forme de motifs monomériques de polycondensation, des polyols organiques mentionnés précédemment et des acides carboxyliques organiques polybasiques mentionnés précédemment.

7. Composition de revêtement selon la revendication 6, dans laquelle le polyol organique contenant plus de deux groupes hydroxyle par molécule est un ou plusieurs choisis dans le groupe constitué par les polyols aliphatiques et les polyols aromatiques, de préférence un ou plusieurs choisis dans le groupe constitué par les alcools aliphatiques trihydriques et tétrahydriques, plus particulièrement un ou plusieurs choisis dans le groupe constitué par le triméthylolpropane, le glycérol et le pentaérythritol ; et/ou l'acide carboxylique organique polybasique contenant deux ou plus de deux groupes carboxyle ou groupes carboxyle latents par molécule est un ou plusieurs acides polycarboxyliques aliphatiques et leurs anhydrides, acides polycarboxyliques aromatiques et leurs anhydrides, acides hydroxycarboxyliques aliphatiques et leurs lactones, acides hydroxycarboxyliques aromatiques et leurs lactones, de préférence un ou plusieurs acides dicarboxyliques ayant de 2 à 44, de préférence de 4 à 36 atomes de carbone dans la molécule et leurs anhydrides, des acides carboxyliques polyfonctionnels ayant 3 groupes carboxyle ou plus et leurs anhydrides, et des acides hydroxycarboxyliques ayant de 1 à 18, de préférence de 4 à 12 atomes de carbone dans la molécule et des lactones correspondantes, plus préférablement un ou plusieurs choisis dans le groupe constitué par l'acide o-phtalique, l'acide isophtalique, l'acide téréphtalique, l'acide tétrahydrophtalique, l'acide hexahydrophtalique, l'acide cyclohexanedicarboxylique, l'acide succinique, l'acide adipique, l'acide azélaïque, l'acide sébacique, l'acide maléique, l'acide fumarique, l'acide glutarique, l'acide hexachloroheptanedicarboxylique, l'acide tétrachlorophtalique et leurs anhydrides, l'acide hydroxycaproïque, l'acide hydroxybutyrique, l'acide hydroxydécanoïque, l'acide 12-hydroxystéarique et des lactones correspondantes.

8. Composition de revêtement selon l'une quelconque des revendications 1 à 7, dans laquelle l'agent de réticulation en tant que composant (B) comprend un ou plusieurs choisis dans le groupe constitué par des polyisocyanates non bloqués, partiellement bloqués et totalement bloqués et des résines amino, de préférence des polyisocyanates non bloqués.

9. Composition de revêtement selon la revendication 8, dans laquelle l'agent de réticulation de polyisocyanate en tant que composant (B) comprend un ou plusieurs polyisocyanates aliphatiques et cycloaliphatiques, de préférence des diisocyanates, très préférablement des diisocyanates aliphatiques, plus particulièrement le diisocyanate d'hexaméthylène, le diisocyanate d'hexaméthylène dimérisé, le diisocyanate d'hexaméthylène trimérisé, ou toutes combinaisons correspondantes ; et/ou l'agent de réticulation de résine amino en tant que composant (B) est une ou plusieurs résines choisies dans le groupe constitué par les résines de mélamine, de benzoguanamine et d'urée-formaldéhyde, de préférence les résines de mélamine-formaldéhyde, plus particulièrement les résines de mélamine-formaldéhyde éthérifiées avec un alcool monohydrique aliphatique ayant de 1 à 6 atomes de carbone dans la molécule, généralement le méthanol, le butanol, ou toutes combinaisons correspondantes.

10. Composition de revêtement selon l'une quelconque des revendications 1 à 9, dans laquelle le diluant réactif en tant que composant (C) est un ou plusieurs choisis dans le groupe constitué par l'acide (méth)acrylique, les mono-, di-, tri-, tétra-, penta- et hexa(méth)acrylates, les (méth)acrylates de polyester (méth)acrylates, les (méth)acrylates d'époxy, les (méth)acrylates d'uréthane, les (méth)acrylates de mélamine, l'acide maléique et ses diesters et monoesters, l'acétate de vinyle, les éthers vinyliques et les vinylurées, de préférence un ou plusieurs choisis dans le groupe constitué par les di-, tri-, tétra-, penta- et hexa(méth)acrylates et les (méth)acrylates à fonction isocyanate ; plus préférablement un ou plusieurs choisis dans le groupe constitué par le di(méth)acrylate de 1,3-butanediol, le di(méth)acrylate de dipropylène glycol, le di(méth)acrylate de tripropylène glycol, le di(méth)acrylate d'hexanediol, le di(méth)acrylate de néopentyl glycol, le di(méth)acrylate de 2-butyl-2-éthyl-1,3-propanediol, le tri(méth)acrylate de glycérol, le tri(méth)acrylate de triméthylolpropane, le tétra(méth)acrylate de pentaérythritol, le tétra(méth)acrylate de dipentaérythritol, l'hexa(méth)acrylate de dipentaérythritol, les di(méth)acrylates de néopentyl glycol polyalcoxylés, les di(méth)acrylates de 2-butyl-2-éthyl-1,3-propanediol polyalcoxylés, les tri(méth)acrylates de glycérol polyalcoxylés, les tri(méth)acrylates de triméthylolpropane polyalcoxylés, les tétra(méth) acrylates de pentaérythritol polyalcoxylés, et les hexa(méth)acrylates de dipentaérythritol polyalcoxylé, le polyalcoxylé étant de préférence polyéthoxylé et/ou polypropoxylé, en particulier le tri(méth)acrylate de triméthylolpropane, le di(méth)acrylate de tripropylène glycol, le dipentaérythritol acrylé, le diacrylate d'hexanediol, le triacrylate éthoxy de triméthylolpropane, les (méth)acrylates à fonction isocyanate, ou toutes combinaisons correspondantes.

11. Composition de revêtement selon l'une quelconque des revendications 1 à 10, **caractérisée en ce que** les polyacrylates comportant une quantité réticulable de groupes hydroxyle (A1) ont un poids moléculaire moyen en nombre Mₙ de 1 000 à 5 000 g/mole, de préférence de 1 500 à 4 000 g/mole, et/ou un poids moléculaire moyen en poids M_{w} de 3 000 à 20 000 g/mole, de préférence de 5 000 à 15 000 g/mole ; et/ou les polyesters comportant une quantité réticulable de groupes hydroxyle (A2) ont un poids moléculaire moyen en nombre Mₙ de 1 000 à 5 000 g/mole, de préférence de 1 000 à 3 000 g/mole ; et/ou ont un poids moléculaire moyen en poids M_{w} de 2 000 à 20 000 g/mole, de préférence de 2 500 à 5 000 g/mole ; où les poids moléculaires moyens en nombre et en poids sont déterminés par chromatographie à perméation de gel à l'aide d'étalons de polystyrène.

12. Composition de revêtement selon l'une quelconque des revendications 1 à 11, dans laquelle il s'agit d'une composition de revêtement à deux composants, le composant (A) étant stocké séparément du composant (B).

13. Procédé de préparation d'une composition de revêtement selon l'une quelconque des revendications 1 à 11 par mélange des composants compris dans celle-ci.

14. Utilisation de la composition de revêtement selon l'une quelconque des revendications 1 à 12 pour la production d'une couche de revêtement durcie sur un substrat par application et durcissement thermique subséquent, de la composition de revêtement selon l'une quelconque des revendications 1 à 12.

15. Couche de revêtement qui est produite sur un substrat en utilisant la composition de revêtement selon l'une quelconque des revendications 1 à 12.
